# EUROPÄISCHE PATENTSCHRIFT

(11) **EP 2 404 087 B1**
(45) Veröffentlichungstag und Bekanntmachung des Hinweises auf die Patenterteilung: **07.05.2014**
(21) Anmeldenummer: 10706545.0
(22) Anmeldetag: 01.03.2010
(51) Int. Cl.: F16J 15/16, F16J 15/447

(54) **ANORDNUNG ZUR BERÜHRUNGSLOSEN ABDICHTUNG EINER DREHBAR GELAGERTEN WELLE ZU EINEM GEHÄUSE HIN UND GETRIEBE**
ASSEMBLY FOR CONTACTLESSLY SEALING A ROTATABLY MOUNTED SHAFT WITH RESPECT TO A HOUSING, AND GEARBOX
DISPOSITIF DESTINÉ À ASSURER L'ÉTANCHÉITÉ, SANS CONTACT, D'UN ARBRE MONTÉ EN ROTATION, VIS-À-VIS D'UN BOÎTIER ET D'UNE TRANSMISSION

(30) Priorität: 03.03.2009 DE 102009011124
(43) Veröffentlichungstag der Anmeldung: 11.01.2012
(73) Patentinhaber: SEW-EURODRIVE GmbH & Co. KG, 76646 Bruchsal (DE)
(72) Erfinder: SCHÜTTERLE, Ingo, 72488 Sigmaringen (DE); HESS, Andreas, 76467 Bietigheim (DE)
(86) Internationale Anmeldenummer: PCT/EP2010/001242
(87) Internationale Veröffentlichungsnummer: WO 2010/099914

(56) Entgegenhaltungen:
- EP-A1- 1 496 294
- DE-T5-112004 000 627
- US-A- 4 157 834
- US-A- 5 636 848
- US-A1- 2003 035 718

## Beschreibung

Die Erfindung betrifft eine Anordnung zur berührungslosen Abdichtung einer drehbar gelagerten Welle zu einem Gehäuse hin und ein Getriebe.

Bei Dichtungsanordnungen mit Wellendichtringen ist bekannt, dass bei zunehmender Drehzahl die Reibungsverluste zunehmen.

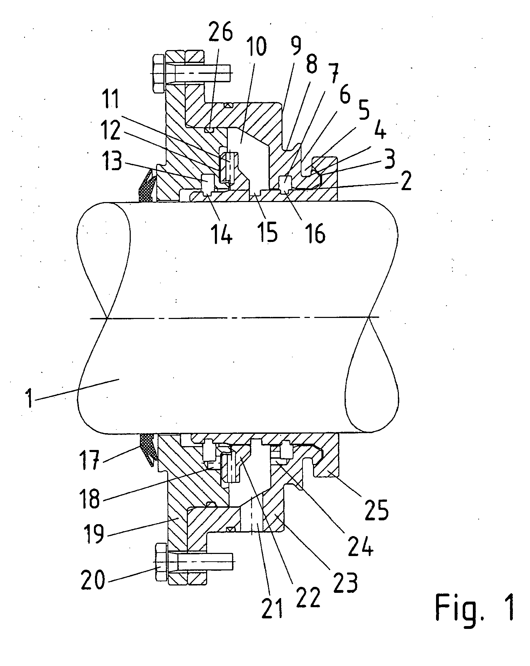

Aus der DE 602 16 474 T2 ist eine berührungslose Abdichtung bekannt, bei der an einer Welle eine Schleuderscheibe vorgesehen ist, die Radialbohrungen als Schleuderöffnungen (dortige Figur 1, Bezugszeichen 44) aufweist. Die Radialbohrungen ermöglichen das Herausfließen von Schmieröl, welches in einem radial innen liegenden Schleuderraum angesammelt wurde und schleudern dann das Öl an ihrem anderen Endbereich in einen Fangraum ab. Die Schleuderscheibe weist zu einem nicht drehenden Teil eine Axialspalt auf, der den Schleuderraum mit dem Fangraum verbindet.

Aus der DE 479 388 A ist eine Labyrinthdichtung bekannt.

Aus der US 2 598 381 A ist bekannt, einen teilweise mit Schmieröl befüllten Innenraum eines Getriebes über einen Luftkanal (dortige Figur 1, Bezugszeichen 9) mit der Außenluft zu verbinden, beispielsweise zum Druckluftausgleich. Dabei wird Öl durch Zentrifugalkraft nach radial und axial innen befördert, indem eine entsprechende Schräge vorgesehen ist. Unabhängig von diesem Luftkanal wird eine berührungslose Abdichtung durch eine Schleuderkante erreicht, die bei Drehbewegung das Öl in einen Fangraum (dortige Figur 1, Bezugszeichen 13) abschleudert, der mit einer nach unten verlaufenden Bohrung mit dem Ölsumpfraum verbunden ist.

Aus der DE 10 2007 014 657 A1 ist eine Wellenabdichtungsvorrichtung bekannt, bei der ebenfalls abgeschleudertes Öl rückgeführt wird.

Aus der DE 698 18 914 T2 ist ein Wellendichtungssystem bekannt, bei dem ein Wellendichtring vorgesehen ist.

Aus der DE 601 30 871 T1 ist ein Dichtungsring für ein Wasserpumpenlager bekannt.

Aus der DE 42 20 754 A1 ist auch eine berührungslos bei Drehbewegung der Welle eines Getriebes arbeitende Dichtungsanordnung bekannt, bei der ebenfalls abgeschleudertes Öl rückgeführt wird.

Aus der DE 39 30 280 A1 ist ebenfalls eine solche berührungslos bei Drehbewegung der Welle arbeitende Dichtungsanordnung bekannt.

Aus der DE 35 44 783 A1 ist eine berührend arbeitende Dichtungsanordnung bekannt.

Aus der DE 33 30 473 A1 ist auch eine berührungslos bei Drehbewegung der Welle arbeitende Dichtungsanordnung bekannt, bei der ebenfalls abgeschleudertes Öl rückgeführt wird.

Aus der DE 11 2004 000 627 T56 ist auch eine berührungslos bei Drehbewegung der Welle arbeitende Dichtungsanordnung bekannt, bei der ebenfalls von einer Vielzahl von Wellennuten abgeschleudertes Öl rückgeführt wird.

Aus der DE 470 121 A ist auch eine berührungslos bei Drehbewegung der Welle arbeitende Dichtungsanordnung bekannt, bei der ebenfalls von spitzen Kanten abgeschleudertes Öl rückgeführt wird.

Aus der US 5 538 258 A ist eine berührungslose Abdichtung bekannt, bei der an einer Welle eine Schleuderscheibe vorgesehen ist, die Radialbohrungen als Schleuderöffnungen (dortige Figur 1, Bezugszeichen 44) aufweist. Die Radialbohrungen ermöglichen das Herausfließen von Schmieröl, welches in einem radial innen liegenden Schleuderraum angesammelt wurde und spritzen dann das Öl an ihrem anderen Endbereich in einen Fangraum ab. Die Schleuderscheibe weist zu einem nicht drehenden Teil eine Axialspalt auf, der den Schleuderraum mit dem Fangraum verbindet.

**Aus der** US 5 636 848 A **ist eine anordnung zur berührungslosen Abdichtung bekannt, bei der eine Schleuderscheibe vorhanden ist, von der Öl in einen Fangraum abschleudert.**

Der Erfindung liegt daher die Aufgabe zugrunde, Wartungsaufwand zu reduzieren und Verluste bei einer Dichtungsanordnung zu reduzieren.

Erfindungsgemäß wird die Aufgabe bei der Anordnung nach den in Anspruch 1 und bei dem Getriebe nach den in Anspruch 15 angegebenen Merkmalen gelöst.

Wichtige Merkmale der Erfindung bei der Anordnung sind, dass sie zur berührungslosen Abdichtung einer drehbar gelagerten Welle zu einem Gehäuse hin vorgesehen ist, wobei im Innenraum des Gehäuses Öl vorgesehen ist,

insbesondere wobei die drehende Welle vom Innenraum in den Außenbereich herausragt,

wobei eine mit der Welle drehfest verbundene Schleuderscheibe zumindest teilweise radial verlaufende Bohrungen aufweist, die Öl von einem Schleuderraum zu einem die Schleuderscheibe umgebenden Fangraum hin verbinden.

Insbesondere weist also eine mit der Welle drehfest verbundene Schleuderscheibe zumindest teilweise in radialer Richtung verlaufende Bohrungen auf, so dass Schmieröl von einem Schleuderraum zu einem die Schleuderscheibe umgebenden Fangraum hin förderbar ist,
wobei der die Bohrungen mit ihrem radial innen liegenden Endbereich in den Schleuderraum münden und mit ihrem radial außen liegenden Endbereich in den Fangraum münden,
wobei zwischen Schleuderscheibe und einem Flanschteil des Gehäuses ein Spaltbereich vorgesehen ist, der
- den Schleuderraum mit dem Fangraum verbindet und
- in den eine Bohrung mit ihrem ersten Endbereich mündet, die mit ihrem anderen Endbereich in einen weiteren Fangraumbereich mündet, so dass von einer mit der Welle drehfest verbundenen Schleuderkante in den weiteren Fangraumbereich abgeschleudertes Schmieröl auffangbar ist und durch die Bohrung dem Spaltbereich zuleitbar ist,
ein Spaltbereich den weiteren Fangraumbereich mit dem Schleuderraum verbindet.

Die Bohrung zwischen Spaltbereich und weiterem Fangraumbereich verläuft dabei vorzugsweise axial.

Von Vorteil ist bei der Erfindung, dass das Öl aus einem Schleuderraum, der die Schleuderscheibe zumindest teilweise umgibt und durch Gehäuseteile und Welle oder auf der Welle vorgesehene Schleuderbuchse begrenzt ist, herausförderbar ist durch die Schleuderscheibe hindurch, nämlich durch Bohrungen in der Schleuderscheibe. Somit ist ein effektives Entleeren des Schleuderraumes erreichbar. Dabei wird die Entleerung nicht in den Ölsumpfbereich oder Innenraum, beispielsweise in das Innere des Getriebes, ausgeführt sondern in einen Fangraum, also einen Raumbereich, der von den Flanschteilen und dem drehenden Teil, also der Welle oder einer auf der Welle vorgesehenen Schleuderbuchse, begrenzt ist.

Auf diese Weise ist also Verschleiß bei der Dichtung vermeidbar, insbesondere im Vergleich zu Wellendichtringen, die dem Verschleiß ausgesetzt sind. Des Weiteren ist bei der Erfindung der Wartungsaufwand verbessert und die Zuverlässigkeit ebenfalls verbessert.

Weiter ist dabei vorteilhaft, dass Öl, das in einem axial weiter außen liegenden Fangraum aufgefangen wird, in den Spaltbereich zwischen mitdrehbarer Schleuderscheibe und stationärem Flanschteil einleitbar ist. Da dieser Spaltbereich sich radial erstreckt, ist ein Druckgradient zwischen Schleuderraum und Fangraum vorhanden, der eine Förderwirkung hat, die als Rückförderung wirkt. Selbst wenn also Öl an der Schleuderscheibe weiter nach axial außen gelangen würde, würde aus einem nachgeschalteten Fangraum ein Rückleiten durch die Bohrung zwischen Spaltbereich und Fangraumberiech ermöglicht.

Vorteilig ist bei der Erfindung, dass bei einer berührungslosen Dichtung eine aktive Pumpwirkung erzielbar ist.

Bei einer vorteilhaften Ausgestaltung ist die Schleuderscheibe auf einer Schleuderbuchse befestigt, die auf der Welle vorgesehen ist. Von Vorteil ist dabei, dass die Montage einfach ist und außerdem Durchmesserverläufe, wie ein axialer Bereich mit zunehmendem oder abnehmendem Durchmesser, einfach und kostengünstig fertigbar sind. Denn die Schleüderbüchse leitet kein wesentliches Drehmoment hindurch, wobei jedoch die Schleuderscheibe an der Schleuderbuchse befestigt ist. In der Schleuderbuchse sind also auch einfach und kostengünstig Schleuderriuten vorsehbar.

Bei einer vorteilhaften Ausgestaltung ist der Schleuderraum zumindest teilweise durch eine an der Schleuderscheibe umlaufende Rinne begrenzt, die als lokales Maximum des Radialabstandes der Oberfläche der Schleuderscheibe ausgebildet ist, insbesondere wobei also der Radialabstand benachbarter Oberflächenbereiche der Schleuderscheibe mit abnehmendem axialen Abstand zur Rinne hin zunimmt. Von Vorteil ist dabei, dass durch die Zentrifugalkraft angetriebenes Öl in diese Rinne getrieben wird und von dort dann mittels der Bohrungen weggefördert wird.

Bei einer vorteilhaften Ausgestaltung nimmt zumindest in einem axialen Teilbereich der Außendurchmesser der Schleuderbuchse zur Schleuderscheibe hin zu, insbesondere mittels einer an der Schleuderbuchse vorgesehenen Fase, insbesondere so dass Öl gefördert wird in Richtung auf die Schleuderscheibe hin, insbesondere in Richtung auf die Rinne der Schleuderscheibe hin. Von Vorteil ist dabei, dass eine Förderwirkung in Richtung der Rinne und somit über die angeschlossene Bohrung in der Schleuderscheibe ein Entleeren des Öls in den Fangraum erfolgen kann, insbesondere in einfacher Weise.

Bei einer vorteilhaften Ausgestaltung ist zwischen Schleuderscheibe und einem Flanschteil des Gehäuses ein Spaltbereich, insbesondere ein radial ausgedehnter Spaltbereich, vorgesehen, in den eine Bohrung mündet, die mit einer im Flanschteil vorgesehenen Fangnut, also einem Fangraumbereich, verbunden ist, insbesondere wobei die Bohrung auf kleinerem Radialabstand angeordnet ist als der Radialabstand des Endbereichs des Spaltbereichs der in den Fangraum mündet,

insbesondere wobei die Fangnut axial weiter außen als die Schleuderscheibe vorgesehen ist. Von Vorteil ist dabei, dass in dem Spaltbereich eine Pumpwirkung erzielbar ist, da der Spaltbereich an einer ersten Seitenfläche von der Schleuderscheibe und an der dieser erste Seitenfläche gegenüber liegenden Seitenfläche vom nicht mitdrehenden Gehäuseteil, insbesondere also äußerem Flanschteil, begrenzt ist. Somit ergibt sich ein Unterdruck zum Entleeren der einmündenden Bohrung in Richtung des auf größerem Radialabstand angeschlossenen Fangraumes.

Bei einer vorteilhaften Ausgestaltung ist zwischen Schleuderbuchse und einem mit dem Flanschteil verbundenen weiteren Flanschteil ein Spalt vorgesehen, der in einem ersten Teilbereich als Radialspalt und in einem weiteren Teilbereich als Axialspalt ausgeführt ist. Von Vorteil ist dabei, dass das Öl den Radialspalt von außen kommend nach innen durchqueren muss, da der Endbereich des Radialspalts mit größerem Radialabstand zum Innenraum hin angeordnet ist und der Endbereich des Radialspalts mit kleinerem Radialabstand erst entgegen der Zentrifugalkraft erreicht werden muss.

Bei einer vorteilhaften Ausgestaltung mündet der Spalt in eine Fangnut, die im weiteren Flanschteil vorgesehen ist und über einen weiteren Spalt, welcher zwischen dem weiteren Flanschteil und der Schleuderbuchse angeordnet ist, mit dem Fangraum verbunden ist. Von Vorteil ist dabei, dass der Spalt eine weitere Barriere darstellt für eindringendes Öl. Insbesondere ist er als Kapillarspalt ausführbar und stellt auch daher eine sehr schwer zu überwindende Barriere dar.

Bei einer vorteilhaften Ausgestaltung ist der Fangraum in seinem unteren Bereich hin über eine Bohrung mit dem Innenraum des Gehäuses verbunden, insbesondere mit dem Ölsumpfbereich. Von Vorteil ist dabei, dass im Fangraum aufgefangenes oder eingedrungenes Öl entleerbar ist zum Ölsumpf hin, insbesondere getrieben von der Gravitationskraft.

Bei einer vorteilhaften Ausgestaltung sind die Flanschteile schraubverbunden und zwischen ihnen eine Dichtung, insbesondere O-Ring-Dichtung, angeordnet ist. Von Vorteil ist dabei, dass das Gehäuse dicht und fest ausführbar ist. Insbesondere ist die Verbindungsstelle der beiden Flanschteile abgedichtet, so dass die O-Ring-
Dichtung weiter innen liegt in der Verbindungsfläche und die Schraubverbindung weiter außen. Somit dringt kein Öl vom Innenraum über die Verbindungsfläche, also Berührfläche, zum Gewindebereich der Schraube und von dort in den Außenbereich. In der Figur 1 ist eine vom Außenbereich durch das äußere und das innere Flanschteil hindurchgehende Schraube gezeigt. Bei einem weiter verbesserten Ausführungsbeispiel dringt die Schraube zwar durch das äußere Flanschteil hindurch, wird aber in eine nicht durchgehende Bohrung im inneren Flanschteil eingeschraubt.

Bei einer vorteilhaften Ausgestaltung ist am weiteren Flanschteil ein erster Prallbereich mit erster Abfaufrinne angeordnet,
insbesondere wobei am weiteren Flanschteil ein zweiter Prallbereich mit zweiter Ablaufrinne angeordnet ist,
insbesondere wobei Prallbereich und Ablaufrinne rotationssymmetrisch ausgeführt sind. Von Vorteil ist dabei, dass jeder Prallbereich mit einer entsprechenden Ablaufrinne kombiniert vorsehbar ist, so dass das Abführen der aufgeprallten Flüssigkeitsteile schnell und einfach ermöglicht ist. Somit ist die Hauptmenge des bei Betrieb oberhalb des Ölniveaus herumgespritzten Öls auffangbar und zurückführbar, insbesondere am Außenumfang der gesamten Dichtungsanordnung.

Bei einer vorteilhaften Ausgestaltung ist der oder den Fangnuten jeweils eine Schleudernut radial gegenüberstehend an der Schleuderbuchse angeordnet. Von Vorteil ist dabei, dass die Schleudernut einfach und kostengünstig herstellbar ist.

Bei einer vorteilhaften Ausgestaltung sind die Spaltbereiche jeweils als Kapillarspaltbereiche ausgeführt. Von Vorteil ist dabei, dass der Strömungswiderstand für Öl sehr hoch ist und dieses somit am zumindest schnellen Durchfließen des Spaltes gehindert wird.

Bei einer vorteilhaften Ausgestaltung ist an der Welle ein Staubschutz angeordnet, der in Berührung steht mit dem Flanschteil. Von Vorteil ist dabei, dass die Funktionsweise der Sichtungsanordnung nicht gestört wird. Denn bei großen eindringenden Staubmengen könnte beispielsweise ein Verstopfen einer Bohrung bewirkt werden. Der mittels des Staubschutzes geschützte Raumbereich ist direkt oder mittels eines Spaltes verbindbar mit einer Fangnut oder einem anderweitigen Fangraumbereich, wie beispielsweise dem Fangraum.

Der Staubschutz hat hierbei keinen Anteil an der eigentlichen Dichtwirkung der erfindungsgemäßen Dichtungsanordnung. Denn er schützt nur gegen eindringenden Staub und berührt das zum Gehäuse gehörige Flanschteil an seiner äußeren Oberfläche.

Bei einer vorteilhaften Ausgestaltung liegt der Ölstand bei ruhendem Getriebe unterhalb, also in Gravitationsrichtung unterhalb, der Anordnung. Von Vorteil ist dabei, dass im ruhenden Zustand keine Möglichkeit besteht, dass Öl durch die Dichtungsanordnung durchläuft und dann in den Außenbereich dringt.

Weitere Vorteile ergeben sich aus den Unteransprüchen.

### Bezugszeichenliste

- 1: Welle
- 2: Axialspalt
- 3: Eintrittslabyrinth, umfassend radial ausgedehnten spaltabschnitt
- 4: Ablaufrinne
- 5: Beruhigungsraum
- 6: Prallfläche
- 7: Fangnut
- 8: Ablaufrinne
- 9: Prallfläche
- 10: Fangraum
- 11: Schleuderbohrung
- 12: Spalt, insbesondere Radialspalt
- 13: Fangnut, weiterer Fangraumbereich
- 14: dritte Schleudernut
- 15: zweite Schleudernut
- 16: erste Schleudernut
- 17: Staubschutz
- 18: innere Rücklaufbohrung
- 19: Flansch, äußerer Dichtflansch
- 20: Halteschraube
- 21: äußere Rücklaufbohrung
- 22: Schleuderscheibe
- 23: innerer Dichtflansch
- 24: Ablaufbohrung
- 25: Schleuderbuchse
- 26: O-Ring-Dichtung
- 27: Schleuderraum
- 28: Fase
- 29: Aufweitung

Die Erfindung wird nun anhand von Abbildungen näher erläutert:

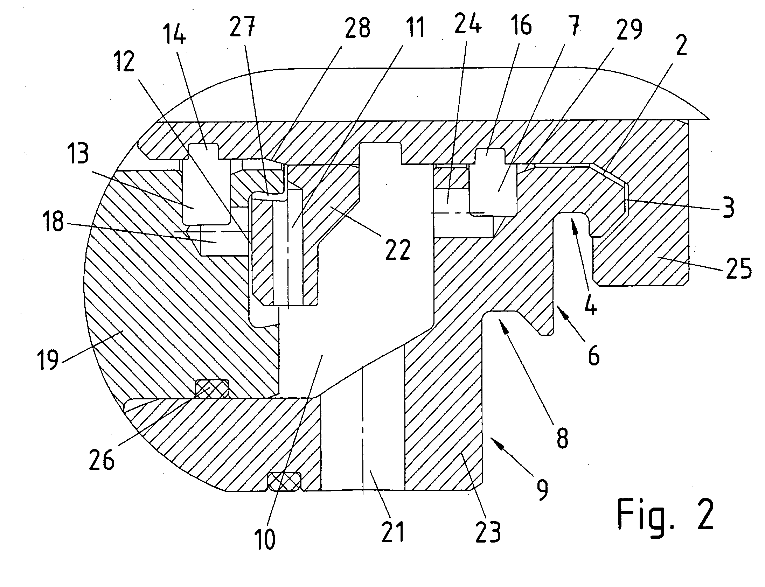

In der Figur 1 ist eine erfindungsgemäße Anordnung schematisch dargestellt. In Figur 2 ist ein vergrößerter Ausschnitt gezeigt.

Erfindungsgemäß wird eine berührungslose Abdichtung erreicht zwischen einer drehenden Welle 1 und einem Gehäuse.

Hierbei wird auf der Welle 1 eine Schleuderbuchse 25 angeordnet, an der zusätzlich eine Schleuderscheibe 22 angeordnet wird, insbesondere stoffschlüssig verbunden oder pressverbunden.

Am Gehäuse ist ein äußerer Dichtflansch 19 und ein innerer Dichtflansch 23 vorgesehen, wobei die Schleuderscheibe über einen Spalt 12 von dem äußeren Dichtflansch 19 und die Schleuderbuchse 25 über einen Spalt, umfassend das Eintrittslabyrinth 3 und den Axialspalt 2, von dem inneren Dichtflansch 23 beabstandet ist.

Die Dichtanordnung ist mehrstufig aufgebaut und es werden auf diese Weise dem durch jede Hürde durchtretenden Öl jeweils eine weitere Hürde entgegengestellt.

Die gesamte Dichtanordnung ist oberhalb desjenigen Ölstandes angeordnet, der sich bei ruhender Welle 1 einstellt. Bei Betrieb der Welle 1 kann Ölschaum oder spritzendes Öl erzeugt werden, beispielsweise durch mit der Welle direkt oder indirekt in Verbindung stehende Zahnräder. Vorzugsweise ist dieser Ölstand unterhalb der Rücklaufbohrung 21 angeordnet.

Das an der Prallfläche 9 auftreffende Öl wird über eine ringförmig ausgeprägte Ablaufrinne 8 abgeleitet und nach unten hin zum Ölsumpf hin abgeleitet.

Axial etwas weiter innen, aber radial tiefer ist die Prallfläche 6 vorgesehen, die nach radial innen von einem ringförmigen Beruhigungsraum 5 begrenzt ist, welcher radial innen liegend eine Ablaufrinne 4 aufweist. Das Eintrittslabyrinth 3, welches zwischen Schleuderbuchse 25 und innerem Dichtflansch 23 vorgesehen ist, beginnt in axialer Richtung nach innen gerichtet, geht dann über in einen radial verlaufenden Abschnitt und endet als radial weiter innen liegender Axialspalt 2, wobei dieser dann in axialer Richtung nach außen gerichtet verläuft und an seinem Endbereich sich aufweitet in Richtung der Fangnut 7. Das Aufweiten, also die mit Bezugszeichen 29 gekennzeichnete Aufweitung, ist mittels einer entsprechenden Fase ausgeführt, so dass in diesem Bereich die Kapillarwirkung unterbrochen wird. An der Schleuderbuchse 25 ist der Fangnut 7 gegenüber liegend eine Schleudernut 16 angeordnet, die zum Abschleudern von Öl in Richtung Fangnut 7 vorgesehen ist. Am unteren Bereich der Fangnut 7 ist eine Ablaufbohrung vorgesehen, die in axialer Richtung ausgerichtet ist und in einen Fangraum 10 leitet, der wiederum über eine Bohrung, nämlich die äußere Rücklaufbohrung 21, im inneren Dichtflansch 23 Öl zurück in den Ölsumpf leitet.

Zwischen Schleuderbuchse 25 und innerem Dichtflansch 23 ist ein Spalt vorgesehen, der die Fangnut 7 mit dem Fangraum 10 verbindet.

Im axialen Bereich des Fangraums 10 ist wiederum eine Schleudernut 15 angeordnet, so dass Öl, welches über den genannten Spalt eindringt abgeschleudert wird.

Zusätzlich ist axial nachfolgend noch die Schleuderscheibe 22 vorgesehen, die ebenfalls Öl abschleudert in den Fangraum 10.

Axial auf die Schleuderscheibe 22 folgend ist wiederum eine weitere Schleudernut 14 vorgesehen, der eine Fangnut 13 am Flanschteil 19 gegenüberstehend angeordnet ist. Somit wird Öl abgeschleudert von den Kanten der Schleudernut 14 in die Fangnut 13.

Die Schleuderbuchse 25 ist derart mit einer Fase 28 ausgeführt, dass ihr Außendurchmesser in einem axialen Bereich, welcher zwischen der Schleudernut 14 und der Schleuderscheibe 22 angeordnet ist, anwächst und zwar mit abnehmendem Abstand zur Schleuderscheibe 22 hin zunimmt, so dass gegebenenfalls auftretendes Öl in diese Richtung, also zur Schleuderscheibe 22 hin gefördert wird. Die Fase 28 wirkt also bei der Rückförderung mit. Das Öl wird dann in den Schleuderraum 27 gefördert , der mittels Schleuderbohrungen 11, welche in radialer Richtung in die Schleuderscheibe 22 eingebracht sind, in den Fangraum 10 hin entleert wird. Dabei sind am Umfang der Schleuderscheibe mehrere solcher Schleuderbohrungen 11 vorgesehen, insbesondere zwischen vier und zwanzig.

Die axial weiter außen angeordnete Fangnut 13 weist an ihrem unteren Bereich, insbesondere umfassend den tiefsten Punkt, eine axial gerichtete Bohrung 18 auf zum Spaltbereich, also Spalt 12, hin, welcher zwischen der Schleuderscheibe 22 und dem äußeren Flansch 19 vorgesehen ist. Der Fangnut 13 ist eine Schleudernut 14 zugeordnet, die an der Schleuderbuchse 25 vorgesehen ist.

Dieser Spaltbereich des Spaltes 12 ist zum Fangraum 10 hin offen. Da die Bohrung 18 auf kleinerem Radiusabstand in den Spaltbereich 12 hin einmündet als der Radialabstand des radial außen liegenden Endbereichs des Spaltbereichs 12 ist, wo der Spaltbereich 12 in den Fangraum 10 mündet, ist eine Förderwirkung vorhanden. Denn es wird durch die Drehbewegung ein Unterdruck erzeugt, der zum Auspumpen der Bohrung 18 und somit der Fangnut 13 führt.

Somit wird zur Entleerung nicht nur das bekannte Abschleudern vorgesehen sondern auch die Pumpwirkung eines Spaltbereichs 12.

Das Entleeren der Fangnuten 7 und 13 erfogt also in den Fangraum 10 hinein und nicht direkt in den Innenraum und/oder den Ölsumpfbereich. Hierzu verbindet die Bohrung 24 die Fangnut 7 mit dem Fangraum 10.

Innerer Dichtflansch 23 und äußerer Dichtflansch 19 sind mittels einer O-Ring-Dichtung 26 abgedichtet miteinander verbunden, wobei mehrere in Umfangsrichtung aufeinander folgende Halteschrauben 20 die beiden Dichtflansche verbinden. Es ist also auch eine einstückige Ausführung der beiden Dichtflansche 19 und 23 ausführbar. Außenseitig ist noch ein Staubschutz 17 vorgesehen.

Mittels der Fangnut 13 ist ein weiterer Fangraumbereich gebildet, der separat vom Fangraum 10 angeordnet ist und weiter axial außen vorgesehen ist.

## Patentansprüche

1. Anordnung zur berührungslosen Abdichtung einer drehbar gelagerten Welle (1) zu einem Gehäuse hin, wobei der Innenraum des Gehäuses zumindest teilweise mit Schmieröl befüllt ist,
wobei eine mit der Welle (1) drehfest verbundene Schleuderscheibe (22) zumindest teilweise in radialer Richtung verlaufende Bohrungen (11) aufweist, so dass Schmieröl von einem Schleuderraum (27) zu einem die Schleuderscheibe zumindest teilweise umgebenden Fangraum (10) hin förderbar ist,
wobei die Bohrungen (11) mit ihrem radial innen liegenden Endbereich in den Schleuderraum (27) münden und mit ihrem radial außen liegenden Endbereich in den Fangraum (10) münden,
wobei zwischen Schleuderscheibe und einem Flanschteil (19) des Gehäuses ein Spaltbereich (12) vorgesehen ist, der
- den Schleuderraum (27) mit dem Fangraum (10) verbindet
**dadurch gekennzeichnet, dass**
- eine Bohrung (18) in den Spaltbereich (12) mündet, die mit ihrem anderen Endbereich in einen weiteren Fangraumbereich (13) mündet, so dass von einer mit der Welle (1) drehfest verbundenen Schleuderkante in den weiteren Fangraumbereich (13) abgeschleudertes Schmieröl auffangbar ist und durch die Bohrung (18) dem Spaltbereich (12) zuleitbar ist,
wobei ein Spaltbereich den weiteren Fangraumbereich (13) mit dem Schleuderraum (27) verbindet.

2. Anordnung nach mindestens einem der vorangegangenen Ansprüche,
**dadurch gekennzeichnet, dass**
die Schleuderscheibe (22) auf einer Schleuderbuchse (25) befestigt ist, die auf der Welle (1) vorgesehen ist, die Schleudernuten (14, 16) aufweist.

3. Anordnung nach mindestens einem der vorangegangenen Ansprüche,
**dadurch gekennzeichnet, dass**
der Schleuderraum (27) zumindest teilweise durch eine an der Schleuderscheibe (22) umlaufende ringförmige Rinne und durch das Flanschteil (19) des Gehäuses begrenzt ist, die als lokales Maximum des Radialabstandes der Oberfläche der Schleuderscheibe (22) ausgebildet ist, insbesondere wobei also der Radialabstand benachbarter Oberflächenbereiche der Schleuderscheibe (22) mit abnehmendem axialen Abstand zur Rinne hin zunimmt.

4. Anordnung nach mindestens einem der vorangegangenen Ansprüche,
**dadurch gekennzeichnet, dass**
zumindest in einem axialen Teilbereich der Außendurchmesser der Schleuderbuchse (25) zur Schleuderscheibe (22) hin zunimmt mittels einer an der Schleuderbuchse (25) vorgesehenen Fase (28), so dass Öl gefördert wird in Richtung auf die Schleuderscheibe (22) hin, insbesondere in Richtung auf die Rinne der Schleuderscheibe hin.

5. Anordnung nach mindestens einem der vorangegangenen Ansprüche,
**dadurch gekennzeichnet, dass**
der Spaltbereich (12) ein Radialspalt ist, also ein radial ausgedehnter Spaltbereich,
wobei der weitere Fangraumbereich (13) von einer im Flanschteil (19) vorgesehenen Fangnut (13) gebildet ist,
wobei die Bohrung 18 auf kleinerem Radialabstand zur Wellenachse angeordnet ist als der Radialabstand des Endbereichs des Spaltbereichs (12) der in den weiteren Fangraumbereich (13) mündet,
wobei die Fangnut (13) axial weiter außen als die Schleuderscheibe 22 vorgesehen ist.

6. Anordnung nach mindestens einem der vorangegangenen Ansprüche,
**dadurch gekennzeichnet, dass**
zwischen Schleuderbuchse (25) und einem mit dem Flanschteil (19) verbundenen weiteren Flanschteil (23) ein Spalt (2, 3) vorgesehen ist, der in einem ersten Teilbereich als radial und in einem weiteren Teilbereich als axial verläuft.

7. Anordnung nach mindestens einem der vorangegangenen Ansprüche,
**dadurch gekennzeichnet, dass**
der Spalt (2, 3) in eine Fangnut (7) mündet, die im weiteren Flanschteil (23) vorgesehen ist und über einen weiteren Spalt, welcher zwischen dem weiteren Flanschteil (23) und der Schleuderbuchse (25) angeordnet ist, mit dem Fangraum (10) verbunden ist.

8. Anordnung nach mindestens einem der vorangegangenen Ansprüche,
**dadurch gekennzeichnet, dass**
der Fangraum (10) in seinem unteren Bereich hin über eine Bohrung (21) mit dem Innenraum des Gehäuses verbunden ist, insbesondere mit dem Ölsumpfbereich.

9. Anordnung nach mindestens einem der vorangegangenen Ansprüche,
**dadurch gekennzeichnet, dass**
das Flanschteil (19) und das weitere Flanschteil (23) schraubverbunden sind und zwischen ihnen eine Dichtung (26) angeordnet ist.

10. Anordnung nach mindestens einem der vorangegangenen Ansprüche,
**dadurch gekennzeichnet, dass**
am weiteren Flanschteil (23) ein erster Prallbereich (6) mit erster Ablaufrinne (4) angeordnet ist,
wobei am weiteren Flanschteil (23) ein zweiter Prallbereich (9) mit zweiter Ablaufrinne (8) angeordnet ist,
wobei Prallbereich (6, 9) und Ablaufrinne (4, 8) rotationssymmetrisch ausgeführt sind.

11. Anordnung nach mindestens einem der vorangegangenen Ansprüche,
**dadurch gekennzeichnet, dass**
jeder Fangnut (7, 13) eine jeweilige Schleudernut (14, 16) radial gegenüberstehend an der Schleuderbuchse (25) zugeordnet ist.

12. Anordnung nach mindestens einem der vorangegangenen Ansprüche,
**dadurch gekennzeichnet, dass**
die Spaltbereiche (2, 3, 12) jeweils als Kapillarspaltbereiche ausgeführt sind.

13. Anordnung nach mindestens einem der vorangegangenen Ansprüche,
**dadurch gekennzeichnet, dass**
an der Welle (1) ein Staubschutz (17) angeordnet, der in Berührung steht mit dem Flanschteil (19).

14. Anordnung nach mindestens einem der vorangegangenen Ansprüche,
**dadurch gekennzeichnet, dass**
an einem axialen Endbereich eines Spaltbereiches (2), der als Kapillarspalt ausgeführt ist, eine Aufweitung (29) vorgesehen ist, die derart ausgeführt ist, dass die Kapillarwirkung im Bereich der Aufweitung (29) unterbrochen wird.

15. Getriebe,
**dadurch gekennzeichnet, dass**
der Ölstand bei ruhendem Getriebe unterhalb, also in Gravitationsrichtung unterhalb, einer Anordnung nach mindestens einem der vorangegangenen Ansprüche liegt.

## Claims

1. Arrangement for contactless sealing of a rotatably mounted shaft (1) with respect to a housing, the interior of the housing being filled at least partially with lubricating oil,
a centrifugal disc (22), joined in rotatably fixed manner to the shaft (1), having bores (11) extending at least partially in the radial direction, so that lubricating oil is conveyable from a centrifugal chamber (27) towards a collection chamber (10) at least partially surrounding the centrifugal disc,
the bores (11) opening with their radially inner end region into the centrifugal chamber (27), and opening with their radially outer end region into the collection chamber (10),
a gap region (12) being provided between the centrifugal disc and a flange part (19) of the housing, which gap region connects the centrifugal chamber (27) to the collection chamber (10),
**characterised in that**
- a bore (18) opens into the gap region (12), which bore with its other end region opens into a further collection-chamber region (13), so that lubricating oil centrifuged off into the further collection-chamber region (13) by a centrifugal edge joined in a rotatably fixed manner to the shaft (1) is collectable and feedable through the bore (18) to the gap region (12),
a gap region connecting the further collection-chamber region (13) to the centrifugal chamber (27).

2. Arrangement according to at least one of the preceding claims,
**characterised in that**
the centrifugal disc (22) is secured on a centrifugal sleeve (25) which is provided on the shaft (1), which has centrifugal grooves (14, 16).

3. Arrangement according to at least one of the preceding claims,
**characterised in that**
the centrifugal chamber (27) is bounded at least partially by an annular channel extending around on the centrifugal disc (22) and by the flange part (19) of the housing, which channel is formed as a local maximum of the radial distance of the surface of the centrifugal disc (22), in particular the radial distance of adjacent surface regions of the centrifugal disc (22) thus increasing with decreasing axial distance towards the channel.

4. Arrangement according to at least one of the preceding claims,
**characterised in that**
at least in one axial partial region, the outside diameter of the centrifugal sleeve (25) increases towards the centrifugal disc (22) by means of a chamfer (28) provided on the centrifugal sleeve (25), so that oil is conveyed in the direction of the centrifugal disc (22), in particular in the direction of the channel of the centrifugal disc.

5. Arrangement according to at least one of the preceding claims,
**characterised in that**
the gap region (12) is a radial gap, that is to say a radially extended gap region,
the further collection-chamber region (13) being formed by a collection groove (13) provided in the flange part (19),
the bore 18 being arranged at a smaller radial distance to the shaft axis than the radial distance of the end region of the gap region (12) which opens into the further collection-chamber region (13),
the collection groove (13) being provided axially further outwards than the centrifugal disc 22.

6. Arrangement according to at least one of the preceding claims,
**characterised in that**
a gap (2, 3) is provided between the centrifugal sleeve (25) and a further flange part (23) joined to the flange part (19), which gap extends radially in a first partial region and axially in a further partial region.

7. Arrangement according to at least one of the preceding claims,
**characterised in that**
the gap (2, 3) opens into a collection groove (7) which is provided in the further flange part (23) and is connected to the collection chamber (10) via a further gap arranged between the further flange part (23) and the centrifugal sleeve (25).

8. Arrangement according to at least one of the preceding claims,
**characterised in that**
the collection chamber (10) is connected in its lower region via a bore (21) to the interior of the housing, in particular to the oil-pan region.

9. Arrangement according to at least one of the preceding claims,
**characterised in that**
the flange part (19) and the further flange part (23) are screw-connected and a seal (26) is arranged between them.

10. Arrangement according to at least one of the preceding claims,
**characterised in that**
a first baffle region (6) having first drainage channel (4) is arranged on the further flange part (23),
a second baffle region (9) having second drainage channel (8) being arranged on the further flange part (23),
baffle region (6, 9) and drainage channel (4, 8) being formed rotationally symmetrically.

11. Arrangement according to at least one of the preceding claims,
**characterised in that**
each collection groove (7, 13) is assigned a respective centrifugal groove (14, 16) located radially opposite on the centrifugal sleeve (25).

12. Arrangement according to at least one of the preceding claims,
**characterised in that**
the gap regions (2, 3, 12) are each formed as capillary gap regions.

13. Arrangement according to at least one of the preceding claims,
**characterised in that**
a dust protector (17) in contact with the flange part (19) is arranged on the shaft (1).

14. Arrangement according to at least one of the preceding claims,
**characterised in that**
at one axial end region of a gap region (2) which is formed as a capillary gap, a widening (29) is provided which is formed such that the capillary action is interrupted in the region of the widening (29).

15. Gear unit,
**characterised in that**
when the gear unit is at rest, the oil level lies below, that is to say below in the gravitational direction, an arrangement according to at least one of the preceding claims.

## Revendications

1. Dispositif destiné à assurer l'étanchéité sans contact, vis-à-vis d'un boîtier, d'un arbre (1) monté à rotation, l'espace intérieur du boitier étant au moins partiellement rempli d'huile de lubrification,
sachant qu'un disque de centrifugation (22) lié en rotation à l'arbre (1) présente des perçages (11) s'étendant au moins partiellement en direction radiale, de sorte que l'huile de lubrification peut être véhiculée d'un espace de centrifugation (27) vers un espace collecteur (10) entourant au moins partiellement le disque de centrifugation.
sachant que les perçages (11) débouchent par leur région terminale située radialement à l'intérieur dans l'espace de centrifugation (27) et par leur région terminale située radialement à l'extérieur dans l'espace collecteur (10),
sachant qu'une région interstitielle (12), qui relie l'espace de centrifugation (27) à l'espace collecteur (10), est prévue entre le disque de centrifugation et une partie de bride (19) du boîtier,
**caractérisé en ce qu'**un perçage (18) débouche dans la région interstitielle (12) et débouche par son autre région terminale dans une autre région d'espace collecteur (13), de sorte que l'huile de lubrification projetée par centrifugation, par une arête de centrifugation liée en rotation à l'arbre (1), dans l'autre région d'espace collecteur (13) peut être recueillie et apportée par le perçage (18) à la région interstitielle (12),
sachant qu'une région interstitielle relie l'autre région d'espace collecteur (13) à l'espace de centrifugation (27).

2. Dispositif selon la revendication 1, **caractérisé en ce que** le disque de centrifugation (22) est fixé sur un manchon de centrifugation (25) qui est prévu sur l'arbre (1), qui présente des rainures de centrifugation (14, 16).

3. Dispositif selon au moins une des revendications précédentes, **caractérisé en ce que** l'espace de centrifugation (27) est délimité au moins partiellement par une rigole annulaire faisant le tour du disque de centrifugation (22) et par la partie de bride (19) du boîtier, rigole qui est conçue comme maximum local de la distance radiale de la surface du disque de centrifugation (22), sachant donc notamment que la distance radiale de régions de surface voisines du disque de centrifugation (22) augmente avec la diminution de la distance axiale en direction de la rigole.

4. Dispositif selon au moins une des revendications précédentes, **caractérisé en ce que**, au moins dans une région partielle axiale, le diamètre extérieur du manchon de centrifugation (25) augmente en direction du disque de centrifugation (22) au moyen d'un chanfrein (28) prévu sur le manchon de centrifugation (25), de sorte que l'huile est véhiculée en direction du disque de centrifugation (22), en particulier en direction de la rigole du disque de centrifugation.

5. Dispositif selon au moins une des revendications précédentes, **caractérisé en ce que** la région interstitielle (12) est un interstice radial, donc une région interstitielle radialement étendue,
sachant que l'autre région d'espace collecteur (13) est formée par une rainure collectrice (13) prévue dans la partie de bride (19),
sachant que le perçage (18) est disposé à une distance radiale de l'axe de l'arbre inférieure à la distance radiale de la région terminale de la région interstitielle (12) qui débouche dans l'autre région d'espace collecteur (13),
sachant que la rainure collectrice (13) est prévue axialement plus à l'extérieur que le disque de centrifugation (22).

6. Dispositif selon au moins une des revendications précédentes, **caractérisé en ce qu'**un interstice (2, 3), qui s'étend radialement dans une première région partielle et axialement dans une autre région partielle, est prévu entre le manchon de centrifugation (25) et une autre partie de bride (23) assemblée à la partie de bride (19).

7. Dispositif selon au moins une des revendications précédentes, **caractérisé en ce que** l'interstice (2, 3) débouche dans une rainure collectrice (7) qui est prévue dans l'autre partie de bride (23) et qui est reliée à l'espace collecteur (10) par l'intermédiaire d'un autre interstice qui est disposé entre l'autre partie de bride (23) et le manchon de centrifugation (25).

8. Dispositif selon au moins une des revendications précédentes, **caractérisé en ce que** l'espace collecteur (10) est, dans sa région inférieure, relié par l'intermédiaire d'un perçage (21) à l'espace intérieur du boîtier, notamment à la région de carter d'huile.

9. Dispositif selon au moins une des revendications précédentes, **caractérisé en ce que** la partie de bride (19) et l'autre partie de bride (23) sont assemblées par vissage, et un joint d'étanchéité (26) est disposé entre elles.

10. Dispositif selon au moins une des revendications précédentes, **caractérisé en ce qu'**une première région déflectrice (6) pourvue d'une première rigole d'évacuation (4) est disposée sur l'autre partie de bride (23),
sachant qu'une deuxième région déflectrice (9) pourvue d'une deuxième rigole d'évacuation (8) est disposée sur l'autre partie de bride (23),
sachant que la région déflectrice (6, 9) et la rigole d'évacuation (4, 8) sont réalisées à symétrie de révolution.

11. Dispositif selon au moins une des revendications précédentes, **caractérisé en ce qu'**une rainure de centrifugation respective (14, 16) est associée, radialement en vis-à-vis sur le manchon de centrifugation (25), à chaque rainure collectrice (7, 13).

12. Dispositif selon au moins une des revendications précédentes, **caractérisé en ce que** les régions interstitielles (2, 3, 12) sont respectivement réalisées sous forme de régions interstitielles capillaires.

13. Dispositif selon au moins une des revendications précédentes, **caractérisé en ce qu'**un pare-poussière (17), qui est en contact avec la partie de bride (19), est disposé sur l'arbre (1).

14. Dispositif selon au moins une des revendications précédentes, **caractérisé en ce qu'**un élargissement (29) est prévu sur une région terminale axiale d'une région interstitielle (2) qui est réalisée sous forme d'interstice capillaire, et il est réalisé de telle sorte que l'effet capillaire est interrompu dans la région de l'élargissement (29).

15. Transmission, **caractérisée en ce que** le niveau d'huile lorsque la transmission est au repos se situe en dessous, donc en dessous dans la direction de la gravité, d'un dispositif selon au moins une des revendications précédentes.
